# EUROPEAN PATENT APPLICATION

(11) **EP 4 811 923 A2**
(43) Date of publication of application: **23.09.2026**
(21) Application number: 26197335.8
(22) Date of filing: 10.05.2021
(51) Int. Cl.: H04W 76/10

(54) **METHOD AND UE FOR ACCESSING SLICE-SPECIFIC RACH RESOURCES POOL**

(62) Document number(s) of the earlier application(s) in accordance with Art. 76 EPC: 21173021.3 / 4 090 123
(71) Applicant: Nokia Technologies Oy, 02610 Espoo (FI)
(72) Inventor: WON, Sung Hwan, Flower Mound, 75028 (US); TOMALA, Malgorzata, 54-513 Wroclaw (PL)
(74) Representative: Page White Farrer

(57) **Abstract**

A user equipment, UE, comprising at least one processor, and at least one memory storing instructions that, when executed by the at least one processor cause the UE at least to trigger, when the UE is in connected-mode with an inactive state, a random-access, RA, procedure for resumption of a radio resource control, RRC, connection; receive mapping information on a mapping between one or more network slice identifiers and one or more network slice group identities; provide, from a non-access stratum, NAS, layer, at least one network slice identifier to an access stratum, AS, layer; apply, by the AS layer, a network slice group identity for the RA procedure, based on the mapping information, wherein the network slice group identity is from the one or more network slice group identities..

## Description

### FIELD

This disclosure generally relates to mobile communication networks such as a 5G communication network, and more particularly to random-access channel (RACH) configuration selection.

### BACKGROUND

The fifth-generation technology standard for broadband cellular networks (5G) targets a variety of use cases and industries. A more distributed core with combination of variety of radio access networks (RAN) deployments are generally viewed as the framework for more flexibility, customization, and service-driven management in a viable 5G system. From network traffic management perspective, 5G also allows different services coordination and arrangements to enhance the mobile network performance.

A primary 5G data-driven use case concerns the following: Enhanced Mobile Broadband (eMBB) requires high data rates across a wide radio coverage area, when a user communicates over the air with base station in regular radio operation in a good radio coverage. However, there are another use cases and traffic types with different needs (URLLC, V2X, IoT). Standardized methods differentiate various traffic characteristics to ease dedicated treatment and eventually a desired goal. The 3GPP Technical Specification 23.501 specifies 5G Quality of Service (QoS) Identifiers (5QI) for services that are assumed to be frequently used in 5G that enable service optimized signaling per service and reflect 5G QoS characteristics and profiles.

To allow differentiated treatment depending on each customer requirements, 5G also supports a network slicing concept. With network slicing, it is possible for Mobile Network Operators (MNO) to consider customers as belonging to different tenant types with each having different service requirements that govern in terms of what slice types each tenant is eligible to use based on Service Level Agreement (SLA) and subscriptions. The support of network slicing relies on the principle that traffic for different slices is handled by different protocol data unit (PDU) sessions. Network can realize the different network slices by scheduling and also by providing different configurations.

### SUMMARY

As the access stratum (AS) layer of the UE performs the RACH random-access procedure and the NAS layer handles information of the network slices, the NAS layer in the UE provides information about a requested network slice to the AS layer. Currently, TS 24.501 supports provision of slice identifiers from NAS to AS layer, when the UE is in idle-mode and sends an initial NAS message (see for example TS 24.501, V16.8.0, clause 4.6.2.3). However, a UE may be enabled in the future to select between multiple available RACH access procedures based on the requested network slice. Hence, there is a need of defining procedures for UEs being in a connected but inactive mode.

In this context, methods, systems and computer programs for accessing slice-specific RACH resources pools are presented.

According to a first aspect, a method for accessing a network slice specific random-access channel, RACH, resources pool at a user equipment, UE, is presented. The UE is in connected-mode with an inactive state and triggers a random-access, RA, procedure for resumption of a radio resource control, RRC, connection. The method comprises providing at least one slice identifier from a non-access stratum, NAS, layer to an access stratum, AS, layer and determining, by the AS layer, at least one network slice to use for the RRC connection based on the provided at least one slice identifier.

In embodiments, the provision of the at least one slice identifier is performed in response to the RA procedure is triggered due to at least one uplink user data packet of one or more protocol data unit, PDU, sessions, and wherein the at least one slice identifier is associated with the PDU sessions.

In further embodiments, the provision of the at least one slice identifier is performed in response to the RA procedure being triggered due to a UE-initiated 5G mobility management, 5GMM, procedure and the 5GMM procedure being a UE initiated NAS transport procedure to deliver one or more 5G session management, 5GSM, messages, and wherein the at least one slice identifier is associated with the 5GSM messages.

In embodiments, the at least one slice identifier corresponds to a single network slice selection assistance information, S-NSSAI, comprising a standardized slice/service type, SST. Additionally, S-NSSAI may comprise an operator defined access category that correspond to a network slice.

In embodiments, the method further comprises applying RACH configuration parameters corresponding to the at least one determined network slice for the RA procedure selection and preamble transmission.

According to a second aspect, a user equipment, UE, for accessing a slice specific random-access channel, RACH, resources pool, is provided. The UE therefore is in connected-mode with an inactive state and triggers a random-access, RA, procedure for resumption of a radio resource control, RRC, connection. The UE is configured to provide at least one slice identifier from a non-access stratum, NAS, layer to an access stratum, AS, layer, and to determine, by the AS layer, at least one network slice to use for the RRC connection based on the provided at least one slice identifier.

According to a third aspect, a base station, BS, for resumption of a radio resource control, RRC, connection with a user equipment, UE, according to the invention is provided. The BS is configured to configure a network slice specific random-access channel, RACH, configuration per network slice or network slice group, wherein the RACH configuration is associated with a slice identifier, transmit the RACH configuration to the UE, and receive a preamble transmission of the UE comprising RACH configuration parameters corresponding to the transmitted RACH configuration.

According to a fourth aspect, a wireless communication system comprising a base station, BS, and a user equipment, UE, according to the invention is provided. The system is configured to configure, at the BS, a network slice specific random-access channel, RACH, configuration per network slice or network slice group, wherein the RACH configuration is associated with a slice identifier, transmit the RACH configuration from the at the BS to the UE, provide at least one slice identifier from a non-access stratum, NAS, layer of the UE to an access stratum, AS, layer of the UE, determine, by the AS layer of the UE, a network slice or a group of network slices to use for the RRC connection based on the provided at least one slice identifier, and transmit a preamble comprising RACH configuration parameters corresponding to the determined RACH configuration from the UE to the BS.

According to a fifth aspect, a computer program comprising computer program code provided, which, when executed by a computer, causes at least one computer to perform the method described herein.

According to a sixth aspect, a computer program product is provided that comprises program instructions stored on a computer readable medium to execute the method described herein.

According to a seventh aspect, there is provided a user equipment, UE, comprising at least one processor, and at least one memory storing instructions that, when executed by the at least one processor cause the UE at least to: trigger, when the UE is in connected-mode with an inactive state, a random-access, RA, procedure for resumption of a radio resource control, RRC, connection; receive mapping information on a mapping between one or more network slice identifiers and one or more network slice group identities; provide, from a non-access stratum, NAS, layer, at least one network slice identifier to an access stratum, AS, layer; and apply, by the AS layer, a network slice group identity for the RA procedure, based on the mapping information, wherein the network slice group identity is from the one or more network slice group identities.

In some embodiments, the instructions, when executed by the at least one processor, cause the UE at least to: provide the at least one network slice identifier in response to the RA procedure being triggered due to a UE-initiated NAS transport procedure to deliver one or more 5G session management, 5GSM, messages, wherein the at least one network slice identifier is associated with the one or more 5GSM messages.

In some embodiments, the instructions, when executed by the at least one processor, cause the UE at least to: provide the at least one network slice identifier in response to the RA procedure being triggered due to at least one uplink user data packet of one or more protocol data unit, PDU, sessions, wherein the at least one slice identifier is associated with the one or more PDU sessions.

In some embodiments, the at least one network slice identifier corresponds to a single network slice selection assistance information, S-NSSAI, and the S-NSSAI comprises a standardized slice/service type, SST.

In some embodiments, the S-NSSAI further comprises an operator defined access category that corresponds to a network slice.

According to an eighth aspect, there is provided a method of a user equipment, UE, the method comprising: triggering, when the UE is in connected-mode with an inactive state, a random-access, RA, procedure for resumption of a radio resource control, RRC, connection; receiving mapping information on a mapping between one or more network slice identifiers and one or more network slice group identities; providing, from a non-access stratum, NAS, layer, at least one network slice identifier to an access stratum, AS, layer; and applying, by the AS layer, a network slice group identity for the RA procedure, based on the mapping information, wherein the network slice group identity is from the one or more network slice group identities.

In some embodiments, providing the at least one network slice identifier comprises: providing the at least one network slice identifier in response to the RA procedure being triggered due to a UE-initiated NAS transport procedure to deliver one or more 5G session management, 5GSM, messages, wherein the at least one network slice identifier is associated with the one or more 5GSM messages.

In some embodiments, providing the at least one network slice identifier comprises: providing the at least one network slice identifier in response to the RA procedure being triggered due to at least one uplink user data packet of one or more protocol data unit, PDU, sessions, wherein the at least one slice identifier is associated with the one or more PDU sessions.

In some embodiments, the at least one network slice identifier corresponds to a single network slice selection assistance information, S-NSSAI, and the S-NSSAI comprises a standardized slice/service type, SST.

In some embodiments, the S-NSSAI further comprises an operator defined access category that corresponds to a network slice.

According to a ninth aspect, there is provided a computer program comprising instructions which, when executed by a user equipment, UE, cause the UE to perform at least the following: triggering, when the UE is in connected-mode with an inactive state, a random-access, RA, procedure for resumption of a radio resource control, RRC, connection; receiving mapping information on a mapping between one or more network slice identifiers and one or more network slice group identities; providing, from a non-access stratum, NAS, layer, at least one network slice identifier to an access stratum, AS, layer; and applying, by the AS layer, a network slice group identity for the RA procedure, based on the mapping information, wherein the network slice group identity is from the one or more network slice group identities.

### BRIEF DESCRIPTION OF THE FIGURES

A better understanding of the subject matter described herein can be obtained when the following detailed description of various embodiments is considered in conjunction with the following drawings, in which:
FIG. 1 illustrates a simplified wireless communication system, according to some embodiments.
FIG. 2 illustrates a base station (BS) in communication with a user equipment (UE) according to some embodiments.
FIG. 3 illustrates a simplified block diagram of a UE according to some embodiments.
FIG. 4 visualizes a basic procedure for accessing a network slice specific random-access channel (RACH) resources pool at a user equipment (UE).
FIG. 5 shows a procedure for using a group of network slices provided by NAS for a communication between a base station and a UE according to some embodiments.

### DETAILED DESCRIPTION

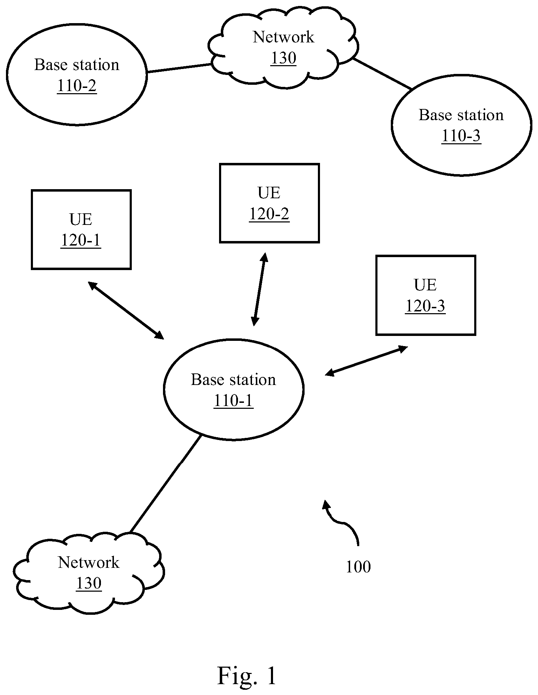

FIG. 1 illustrates a simplified wireless communication system 100, according to some embodiments. It is noted that the system of FIG. 1 is merely one example of a possible system, and that features of the subject matter described herein may be implemented in any of various systems, as desired.

As shown, the wireless communication system 100 includes a base station 110-1 which communicates over a transmission medium with one or more user devices 120. In FIG. 1, only one base station 110-1 and only three user devices 120-1, 120-2, and 120-3 are shown, without limitation. Each of the user devices 120-1, 120-2, and 120-3 may be referred to herein as a "user equipment" (UE). Thus, the user devices 120 are referred to as UEs or UE devices.

As used herein, the term "user equipment" may refer to any of various types of computer systems devices which are mobile or portable and which perform wireless communications. Examples of UEs include mobile telephones or smart phones, portable gaming devices, laptops, wearable devices (e.g., smart watch, smart glasses), Personal Digital Assistants (PDAs), portable Internet devices, music players, data storage devices, or other handheld devices, etc. In general, the term "UE" or "UE device" can be broadly defined to encompass any electronic, computing, and/or telecommunications device (or combination of devices) which is easily transported by a user and capable of wireless communication.

The base station (BS) 110-1 may be a base transceiver station (BTS) or cell site (a "cellular base station"), and may include hardware that enables wireless communication with the UEs 120.

As used herein, the term "base station" has the full breadth of its ordinary meaning, and at least includes a wireless communication station installed at a fixed location and used to communicate as part of a wireless telephone system or radio system.

The communication area (or coverage area) of the base station 110 may be referred to as a "cell." The base station 110 and the UEs 120 may be configured to communicate over the transmission medium using any of various radio access technologies (RATs), also referred to as wireless communication technologies, or telecommunication standards, such as GSM, UMTS (associated with, for example, WCDMA or TD-SCDMA air interfaces), LTE, LTE-Advanced (LTE-A), 5G new radio (5G NR), HSPA, 3GPP2 CDMA2000 (e.g., 1xRTT, 1xEV-DO, HRPD, eHRPD), etc. If the base station 110-1 is implemented in the context of LTE, it may alternately be referred to as an "eNodeB" or "eNB". If the base station 110-1 is implemented in the context of 5G NR, it may alternately be referred to as "gNodeB" or "gNB".

As shown, the base station 110-1 may also be equipped to communicate with a network 130 (e.g., a core network of a cellular service provider, a telecommunication network such as a public switched telephone network (PSTN), and/or the Internet, among various possibilities). Thus, the base station 110-1 may facilitate communication between the user devices 120 and/or between the user devices 120 and the network 130. In particular, the cellular base station 110-1 may provide UEs 120 with various telecommunication capabilities, such as voice, SMS and/or data services.

The base station 110-1 and other similar base stations (such as base stations 110-2 and 110-3) operating according to the same or a different cellular communication standard may thus be provided as a network of cells, which may provide continuous or nearly continuous overlapping service to UEs 120 and similar devices over a geographic area via one or more cellular communication standards.

Thus, while base station 110-1 may act as a "serving cell" for UEs 120 as illustrated in FIG. 1, each UE 120 may also be capable of receiving signals from (and possibly within communication range of) one or more other cells (which might be provided by base stations 110 and/or any other base stations), which may be referred to as "neighboring cells". Such cells may also be capable of facilitating communication between user devices 120 and/or between user devices 120 and the network 130. Such cells may include "macro" cells, "micro" cells, "pico" cells, and/or cells which provide any of various other granularities of service area size. For example, base stations 110-1 and 110-2 illustrated in FIG. 1 might be macro cells, while base station 110-3 might be a micro cell. Other configurations are also possible.

In some embodiments, base station 110-1 may be a next generation base station, e.g., a 5G New Radio (5G NR) base station, or "gNB". In some embodiments, a gNB may be connected to a legacy evolved packet core (EPC) network and/or to a NR core (NRC) network. In addition, a gNB cell may include one or more transition and reception points (TRPs). In addition, a UE capable of operating according to 5G NR may be connected to one or more TRPs within one or more gNBs.

The UE 120 may be capable of communicating using multiple wireless communication standards. For example, the UE 120 may be configured to communicate using a wireless networking (e.g., Wi-Fi) and/or peer-to-peer wireless communication protocol (e.g., Bluetooth, Wi-Fi peer-to-peer, etc.) in addition to at least one cellular communication protocol (e.g., GSM, UMTS (associated with, for example, WCDMA or TD-SCDMA air interfaces), LTE, LTE-A, 5G NR, HSPA, 3GPP2 CDMA2000 (e.g., 1xRTT, 1xEV-DO, HRPD, eHRPD), etc.). The UE 120 may also or alternatively be configured to communicate using one or more global navigational satellite systems (GNSS, e.g., GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

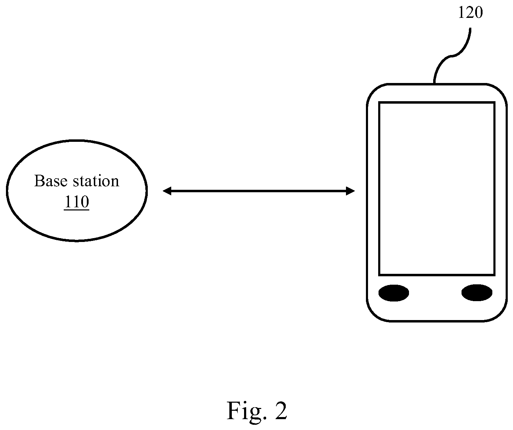

FIG. 2 illustrates user equipment 120 (e.g., one of the devices 120-1, 120-2 and 120-3) in communication with a base station 110, according to some embodiments. The UE 120 may be a device with cellular communication capability such as a mobile phone, a hand-held device, a computer or a tablet, or virtually any type of wireless device.

The UE 120 may include a processor that is configured to execute program instructions stored in memory. The UE 120 may perform any of the method embodiments described herein by executing such stored instructions. Alternatively, or in addition, the UE 120 may include a programmable hardware element such as an field-programmable gate array (FPGA) that is configured to perform any of the method embodiments described herein, or any portion of any of the method embodiments described herein.

The UE 120 may include one or more antennas for communicating using one or more wireless communication protocols or technologies. In some embodiments, the UE 120 may be configured to communicate using, for example, CDMA2000 (1xRTT/1xEV-DO/HRPD/eHRPD) or LTE using a single shared radio and/or GSM or LTE using the single shared radio. The shared radio may couple to a single antenna, or may couple to multiple antennas (e.g., for MIMO) for performing wireless communications. In general, a radio may include any combination of a baseband processor, analog RF signal processing circuitry (e.g., including filters, mixers, oscillators, amplifiers, etc.), or digital processing circuitry (e.g., for digital modulation as well as other digital processing). Similarly, the radio may implement one or more receive and transmit chains using the aforementioned hardware. For example, the UE 120 may share one or more parts of a receive and/or transmit chain between multiple wireless communication technologies, such as those discussed above.

In some embodiments, the UE 120 may include separate transmit and/or receive chains (e.g., including separate antennas and other radio components) for each wireless communication protocol with which it is configured to communicate. As a further possibility, the UE 120 may include one or more radios which are shared between multiple wireless communication protocols, and one or more radios which are used exclusively by a single wireless communication protocol. For example, the UE 120 might include a shared radio for communicating using either of LTE or 5G NR (or LTE or 1xRTT or LTE or GSM), and separate radios for communicating using each of Wi-Fi and Bluetooth. Other configurations are also possible.

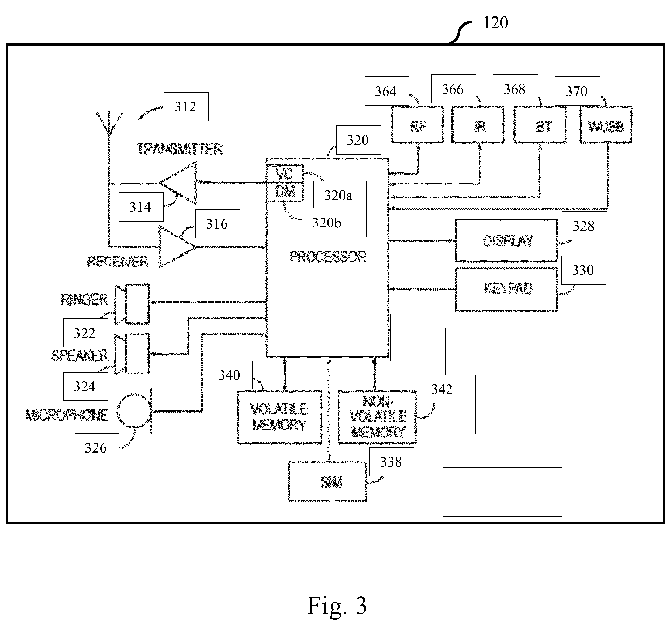

FIG. 3 illustrates a simplified block diagram of a UE 120, according to some embodiments. It is noted that the block diagram of the UE 120 of FIG. 3 is only one example of a possible user device. According to embodiments, UE 120 may be a user device, a mobile device or mobile station, a wireless device or wireless station, a desktop computer or computing device, a mobile computing device (e.g., a laptop, notebook, or portable computing device), a tablet and/or a combination of devices, among other devices.

As shown, the UE 120 may include a set of components configured to perform core functions. For example, this set of components may be implemented as a system on chip (SOC), which may include portions for various purposes. Alternatively, this set of components may be implemented as separate components or groups of components for the various purposes. The set of components may be coupled (e.g., communicatively; directly or indirectly) to various other circuits of the UE 120.

The UE 120 may include at least one antenna 312 in communication with a transmitter 314 and a receiver 316. Alternatively, transmit and receive antennas may be separate. The UE 120 may also include a processor 320 configured to provide signals to and receive signals from the transmitter 314 and receiver 316, respectively, and to control the functioning of the UE 120. Processor 320 may be configured to control the functioning of the transmitter 314 and receiver 316 by effecting control signaling via electrical leads to the transmitter 314 and receiver 316. Likewise, the processor 320 may be configured to control other elements of the UE 120 by effecting control signaling via electrical leads connecting processor 320 to the other elements, such as a display or a memory. The processor 320 may, for example, be embodied in a variety of ways including circuitry, at least one processing core, one or more microprocessors with accompanying digital signal processor(s), one or more processor(s) without an accompanying digital signal processor, one or more coprocessors, one or more multicore processors, one or more controllers, processing circuitry, one or more computers, various other processing elements including integrated circuits (for example, an application specific integrated circuit (ASIC), a field programmable gate array (FPGA), and/or the like), or some combination thereof. Accordingly, although illustrated in FIG. 3 as a single processor, in some example embodiments the processor 320 may comprise a plurality of processors or processing cores.

The UE 120 may be capable of operating with one or more air interface standards, communication protocols, modulation types, access types, and/or the like. Signals sent and received by the processor 320 may include signaling information in accordance with an air interface standard of an applicable cellular system, and/or any number of different wireline or wireless networking techniques, comprising but not limited to Wi-Fi, wireless local access network (WLAN) techniques, such as Institute of Electrical and Electronics Engineers (IEEE) 802.11, 802.16, 802.3, ADSL, DOCSIS, and/or the like. In addition, these signals may include speech data, user generated data, user requested data, and/or the like.

For example, the UE 120 and/or a cellular modem therein may be capable of operating in accordance with various first generation (1G) communication protocols, second generation (2G or 2.5G) communication protocols, third-generation (3G) communication protocols, fourth-generation (4G) communication protocols, fifth-generation (5G) communication protocols, Internet Protocol Multimedia Subsystem (IMS) communication protocols (for example, session initiation protocol (SIP) and/or the like. For example, the UE 120 may be capable of operating in accordance with 2G wireless communication protocols IS-136, Time Division Multiple Access TDMA, Global System for Mobile communications, GSM, IS-95, Code Division Multiple Access, CDMA, and/or the like. In addition, for example, the UE 120 may be capable of operating in accordance with 2.5G wireless communication protocols General Packet Radio Service (GPRS), Enhanced Data GSM Environment (EDGE), and/or the like. Further, for example, the UE 120 may be capable of operating in accordance with 3G wireless communication protocols, such as Universal Mobile Telecommunications System (UMTS), Code Division Multiple Access 2000 (CDMA2000), Wideband Code Division Multiple Access (WCDMA), Time Division-Synchronous Code Division Multiple Access (TD-SCDMA), and/or the like. The UE 120 may be additionally capable of operating in accordance with 3.9G wireless communication protocols, such as Long Term Evolution (LTE), Evolved Universal Terrestrial Radio Access Network (E-UTRAN), and/or the like. Additionally, for example, the UE 120 may be capable of operating in accordance with 4G wireless communication protocols, such as LTE Advanced, 5G, and/or the like as well as similar wireless communication protocols that may be subsequently developed.

It is understood that the processor 320 may include circuitry for implementing audio/video and logic functions of the UE 120. For example, the processor 320 may comprise a digital signal processor device, a microprocessor device, an analog-to-digital converter, a digital-to-analog converter, and/or the like. Control and signal processing functions of the UE 120 may be allocated between these devices according to their respective capabilities. The processor 320 may additionally comprise an internal voice coder (VC) 320a, an internal data modem (DM) 320b, and/or the like. Further, the processor 320 may include functionality to operate one or more software programs, which may be stored in memory. In general, the processor 320 and stored software instructions may be configured to cause the UE 120 to perform actions. For example, the processor 320 may be capable of operating a connectivity program, such as a web browser. The connectivity program may allow the UE 120 to transmit and receive web content, such as location-based content, according to a protocol, such as wireless application protocol (WAP), hypertext transfer protocol (HTTP), and/or the like.

The UE 120 may also comprise a user interface including, for example, an earphone or speaker 324, a ringer 322, a microphone 326, a display 328, a user input interface, and/or the like, which may be operationally coupled to the processor 320. The display 328 may, as noted above, include a touch sensitive display, where a user may touch and/or gesture to make selections, enter values, and/or the like. The processor 320 may also include user interface circuitry configured to control at least some functions of one or more elements of the user interface, such as the speaker 324, the ringer 322, the microphone 326, the display 328, and/or the like. The processor 320 and/or user interface circuitry comprising the processor 320 may be configured to control one or more functions of one or more elements of the user interface through computer program instructions, for example, software and/or firmware, stored on a memory accessible to the processor 320, for example, volatile memory 340, non-volatile memory 342, and/or the like. The UE 120 may include a battery for powering various circuits related to the mobile terminal, for example, a circuit to provide mechanical vibration as a detectable output. The user input interface may comprise devices allowing the UE 120 to receive data, such as a keypad 330 (which can be a virtual keyboard presented on display 328 or an externally coupled keyboard) and/or other input devices.

As shown in FIG. 3, the UE 120 may also include one or more mechanisms for sharing and/or obtaining data. For example, UE 120 may include a short-range radio frequency (RF) transceiver and/or interrogator 364, so data may be shared with and/or obtained from electronic devices in accordance with RF techniques. The UE 120 may include other short-range transceivers, such as an infrared (IR) transceiver 366, a Bluetooth (BT) transceiver 368 operating using Bluetooth wireless technology, a wireless universal serial bus (USB) transceiver 370, a Bluetooth Low Energy transceiver, a ZigBee transceiver, an ANT transceiver, a cellular device-to-device transceiver, a wireless local area link transceiver, and/or any other short-range radio technology. The UE 120 and, in particular, the short-range transceiver may be capable of transmitting data to and/or receiving data from electronic devices within the proximity of the UE, such as within 10 meters, for example. The UE 120 including the Wi-Fi or wireless local area networking modem may also be capable of transmitting and/or receiving data from electronic devices according to various wireless networking techniques, including 6LoWpan, Wi-Fi, Wi-Fi low power, WLAN techniques such as IEEE 802.11 techniques, IEEE 802.15 techniques, IEEE 802.16 techniques, and/or the like.

The UE 120 may comprise memory, such as a subscriber identity module (SIM) 338, a removable user identity module (R-UIM), an eUICC, an UICC, and/or the like, which may store information elements related to a mobile subscriber. In addition to the SIM, the UE 120 may include other removable and/or fixed memory. The UE 120 may include volatile memory 340 and/or non-volatile memory 342. For example, the volatile memory 340 may include Random Access Memory (RAM) including dynamic and/or static RAM, on-chip or off-chip cache memory, and/or the like. The non-volatile memory 342, which may be embedded and/or removable, may include, for example, read-only memory, flash memory, magnetic storage devices, for example, hard disks, floppy disk drives, magnetic tape, optical disc drives and/or media, non-volatile random-access memory (NVRAM), and/or the like. Like volatile memory 340, the non-volatile memory 342 may include a cache area for temporary storage of data. At least part of the volatile and/or non-volatile memory may be embedded in the processor 320. The memories may store one or more software programs, instructions, pieces of information, data, and/or the like which may be used by the UE for performing operations disclosed herein.

The memories may comprise an identifier, such as an International Mobile Equipment Identification (IMEI) code, capable of uniquely identifying the UE 120. The memories may comprise an identifier, such as an international mobile equipment identification (IMEI) code, capable of uniquely identifying the UE 120. In the example embodiment, the processor 320 may be configured using computer code stored at memory 340 and/or 342 to cause the processor 320 to perform operations disclosed herein.

Some of the embodiments disclosed herein may be implemented in software, hardware, application logic, or a combination of software, hardware, and application logic. The software, application logic, and/or hardware may reside on the memory 340, the processor 320, or electronic components, for example. In some example embodiment, the application logic, software or an instruction set is maintained on any one of various conventional computer-readable media. In the context of this document, a "computer-readable medium" may be any non-transitory media that can contain, store, communicate, propagate or transport the instructions for use by or in connection with an instruction execution system, UE, or device, such as a computer or data processor circuitry, with examples depicted at FIG. 3, computer-readable medium may comprise a non-transitory computer-readable storage medium that may be any media that can contain or store the instructions for use by or in connection with an instruction execution system, UE, or device, such as a computer.

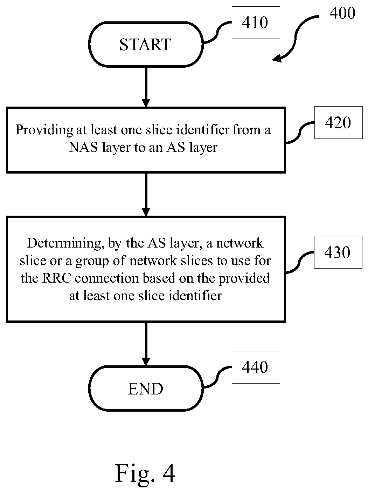

A procedure 400 for accessing a network slice specific random-access channel (RACH) resources pool at a user equipment (UE) 120 is visualized in FIG. 4. The UE 120 starts the procedure in 410, when it is connected-mode with inactive state and triggers a random-access, RA, procedure for resumption of a radio resource control (RRC) connection. The UE 120 comprises upper and lower layers, such as a non-access stratum (NAS) layer and an access stratum (AS) layer. The NAS layer may trigger the resumption of the RRC connection. In other embodiments, the resumption may be triggered by the AS or any other layer.

A non-access stratum (NAS) layer of a UE 120 in the inactive state then provides at least one slice identifier to an access stratum (AS) layer in 420. A slice identifier may correspond to a slice selection assistance information (S-NSSAI) that characterizes the service type identified for a slicing purpose. The S-NSSAIs may also be included in a list of S-NSSAIs. The S-NSSAIs may comprise a standardized slice/service type, SST. Additionally, the S-NSSAIs may also comprise an operator-defined access category that correspond to a network slice. Standardized SST values defined for the purpose to establish global interoperability for slicing - so that public land mobile networks (PLMNs) can support a roaming use case more efficiently for the most commonly used Slice/Service Types - are defined in TS 23.501 as follows:

| **Slice/Service type** | **SST value** | **Characteristics** |
|---|---|---|
| eMBB | 1 | Slice suitable for the handling of 5G enhanced Mobile Broadband. |
| URLLC | 2 | Slice suitable for the handling of ultra- reliable low latency communications. |
| MIoT | 3 | Slice suitable for the handling of massive IoT. |
| V2X | 4 | Slice suitable for the handling of V2X services. |
| HMTC | 5 | Slice suitable for the handling of High-Performance Machine-Type Communications. |

Services indicated in this table for each SST value can also be supported by way of other SSTs.

The Unified Access Control framework in 5G further defines Access Categories and Access Identities to enable categorization of any access attempt. When a user UE 120 initiates an access attempt, the UE 120 determines one or more access identities from the set of standardized access identities, and one access category. The set of access categories distinguishes standardized access categories and operator-defined access categories, to be associated with an access attempt. Signaling currently supports range a from 0 to 63 access categories. TS 24.501 specifies how each UE's access attempt is categorized in the NAS layer. There are 32 access categories values that are reserved for operator use, which can be associated with a slice identifier. Based on the operator-defined set of access categories, the UE 120 determines whether an access attempt for a given slice is authorized based on broadcasted barring information, which is further defined in TS 38.331.

After the AS layer has received the at least one slice identifier, the AS layer determines in 430 which network slice(s) to use for the RRC connection based on the provided at least one slice identifier. Based on this information, the UE 120 then initiates the RA procedure.

There are two types of RA procedures: a 4-step RA type with a message MSG1 and 2-step RA type with a message MSGA. The UE 120 selects the type of random access at initiation of the RA procedure based on a network configuration, which is previously transmitted by the network to the UE 120 either by common or dedicated signaling.

The MSG1 of the 4-step RA type includes a preamble on a physical RACH (PRACH). After MSG1 transmission, the UE 120 monitors for a response from the network, e.g. from a base station or gNB, within a configured time window. For Contention Free RA (CFRA), a dedicated preamble for MSG1 transmission is assigned by the network. Upon receiving a RA response from the network, the UE 120 ends the RA procedure. For Contention Based RA (CBRA), upon reception of the RA response, the UE 120 sends a message MSG3 using the uplink grant scheduled in the response and monitors contention resolution. If contention resolution is not successful after MSG3 (re)transmission(s), the UE 120 goes back to MSG1 transmission.

The MSGA of the 2-step RA type includes a preamble on PRACH and a payload on Primary Uplink Shared Channel (PUSCH). After MSGA transmission, the UE 120 monitors for a response from the network within a configured time window. For CFRA, a dedicated preamble and PUSCH resource are configured for MSGA transmission and upon receiving the network response, the UE 120 ends the RA procedure. For CBRA, if contention resolution is successful upon receiving the network response, the UE 120 ends the RA procedure.

The RA procedure can constitute the end 440 of procedure 400. In this situation, the UE 120 applies RACH configuration parameters corresponding to the at least one determined network slice for the RA procedure and preamble transmission in this RA procedure as described above.

As explained in the outset, S-NSSAIs are provided from NAS layer to the AS layer as the AS layer performs the RA procedure, whereas the S-NSSAIs are handled by the NAS layer. However, which S-NSSAIs are transmitted by the NAS layer to the AS layer may differ depending on a plurality of factors.

For example, if the UE 120 is in idle-mode (which is not the focus of the present disclosure), the NAS layer of a UE 120 provides a list of S-NSSAIs to the AS layer according to the process described in clause 4.6.2.3 of TS 24.501, Rel-16, V16.8.0. Alternatively, the NAS layer may provide a list of S-NSSAIs for RACH-specific purposes, i.e., the S-NSSAI(s) are provided as a separate input, jointly or separately with Access Category and Access Identity given for regular access attempt. Clause 4.6.2.3 of TS 24.501, Rel-16, V16.8.0 is cited here:

### Start of Citation ----------------------------

### 4.6.2.3 Provision of NSSAI to lower layers in 5GMM-IDLE mode

The UE NAS layer may provide the lower layers with an NSSAI (either requested NSSAI or allowed NSSAI) when the UE in 5GMM-IDLE mode sends an initial NAS message.
The AMF may indicate, via the NSSAI inclusion mode IE of a REGISTRATION ACCEPT message, an NSSAI inclusion mode in which the UE shall operate over the current access within the current PLMN or SNPN, if any (see subclauses 5.5.1.2.4 and 5.5.1.3.4), where the NSSAI inclusion mode is chosen among the following NSSAI inclusion modes described in table 4.6.2.3.1.

**Table 4.6.2.3.1: NSSAI inclusion modes and NSSAI which shall be provided to the lower layers**

| **Initial NAS message** | | **N̅S̅S̅A̅I̅ i̅n̅clusion mode A** | **N̅S̅S̅A̅I̅ i̅n̅clusion mode B** | **N̅S̅S̅A̅I̅ i̅n̅clusion mode C** | **NSSAI inclusion mode D** |
|---|---|---|---|---|---|
| REGISTRATION REQUEST message: | | Requested NSSAI | Requested NSSAI | Requested NSSAI | No NSSAI |
| | i) including the 5GS registration type IE set to "initial registration" | | | | |
| REGISTRATION REQUEST message: | | Requested NSSAI | Requested NSSAI | Requested NSSAI | No NSSAI |
| | i) including the 5GS registration type IE set to "mobility registration updating"; and | | | | |
| | ii) initiated by case other than case g) or n) in subclause 5.5.1.3.2 | | | | |
| REGISTRATION REQUEST message: | | Allowed NSSAI | Allowed NSSAI | No NSSAI | No NSSAI |
| | i) including the 5GS registration type IE set to "mobility registration updating"; and | | | | |
| | ii) initiated by case g) or n) in subclause 5.5.1.3.2 | | | | |
| REGISTRATION REQUEST message: | | Allowed NSSAI | Allowed NSSAI | No NSSAI | No NSSAI |
| | i) including the 5GS registration type IE set to "periodic registration updating" | | | | |
| SERVICE REQUEST message | | Allowed NSSAI | See NOTE 1 | No NSSAI | No NSSAI |
| NOTE 1: | All the S-NSSAIs of the PDU sessions that have the user-plane resources requested to be re-established by the service request procedure or the S-NSSAIs of a control plane interaction triggering the service request is related to (see 3GPP TS 23.501 [8]) | | | | |
| NOTE 2: | For a REGISTRATION REQUEST message including the 5GS registration type IE set to "emergency registration", a DEREGISTRATION REQUEST message and a SERVICE REQUEST message including the service type IE set to "emergency services" or "emergency services fallback", no NSSAI is provided to the lower layers. | | | | |
| NOTE 3: | The mapped configured S-NSSAI(s) from the S-NSSAI(s) of the HPLMN are not included as part of the S-NSSAIs in the requested NSSAI or the allowed NSSAI when it is provided to the lower layers. | | | | |

The UE shall store the NSSAI inclusion mode:
a) indicated by the AMF, if the AMF included the NSSAI inclusion mode IE in the REGISTRATION ACCEPT message; or
b) decided by the UE, if the AMF did not include the NSSAI inclusion mode IE in the REGISTRATION ACCEPT message;
together with the identity of the current PLMN or SNPN and access type in a non-volatile memory in the ME as specified in annex C.
The UE shall apply the NSSAI inclusion mode received in the REGISTRATION ACCEPT message over the current access within the current PLMN and its equivalent PLMN(s) or the current SNPN, if any, in the current registration area.
When a UE performs a registration procedure to a PLMN which is not a PLMN in the current registration area or an SNPN, if the UE has no NSSAI inclusion mode for the PLMN or the SNPN stored in a non-volatile memory in the ME, the UE shall provide the lower layers with:
a) no NSSAI if the UE is performing the registration procedure over 3GPP access; or
b) requested NSSAI if the UE is performing the registration procedure over non-3GPP access.
When a UE performs a registration procedure after an inter-system change from S1 mode to N1 mode, if the UE has no NSSAI inclusion mode for the PLMN stored in a non-volatile memory in the ME and the registration procedure is performed over 3GPP access, the UE shall not provide the lower layers with any NSSAI over the 3GPP access.

### End of Citation ----------------------------

In some embodiments, when a UE 120 in 5GMM idle-mode sends an initial NAS message, the UE NAS layer can provide the UE AS layer with one set of S-NSSAIs (or no S-NSSAI) according to clause 4.6.2.3 of TS 24.501, Rel-16, V16.8.0 and, in addition, another set of S-NSSAIs to which the initial NAS message is related (e.g. the another set of S-NSSAIs can be determined assuming that the UE 120 is configured with NSSAI inclusion mode A or B irrespective of the actual NSSAI inclusion mode in which the UE 120 is operating). This may be needed because for example, if the UE 120 is configured with NSSAI inclusion mode D, the UE NAS layer will not send any S-NSSAI to the UE AS layer according to clause 4.6.2.3 of TS 24.501, Rel-16, V16.8.0.

If the UE 120 is in connected-mode with RRC inactive indication (i.e., inactive state or inactive mode) as described above, the NAS layer of the UE 120 in the inactive state provides a list of S-NSSAIs to the AS layer when the NAS layer triggers the resumption of the RRC connection. The S-NSSAIs to be included in the list of S-NSSAIs may further differ depending on the how the resumption of the RRC connection is triggered.

For example, if the resumption of the RRC connection was triggered due to pending uplink user data (to be transmitted by at least one packet of one or more protocol data unit (PDU) sessions), the S-NSSAIs associated with the PDU sessions are provided to the AS layer. However, if the resumption of the RRC connection was triggered due to a UE-initiated 5G mobility management (5GMM) procedure, there are two alternatives: In the case that the 5GMM procedure is a UE-initiated NAS transport procedure to deliver one or more 5G session management (5GSM) messages, the S-NSSAIs associated with the 5GSM messages are provided to the AS layer. In the case that the 5GMM procedure is a registration procedure or a service request procedure, the S-NSSAIs provided to the AS layer are determined corresponding to the procedure described in clause 4.6.2.3 of TS 24.501 (a specific NSSAI inclusion mode can be assumed irrespective of the actual NSSAI inclusion mode in which the UE 120 is operating).

In any of the presented cases, the AS layer finally uses the list of S-NSSAIs provided by the NAS layer for an RA procedure. Therefore, the AS layer may select, based on the S-NSSAIs provided from the NAS layer, corresponding RACH configuration parameters as broadcasted from the BS. This is also described in further detail below.

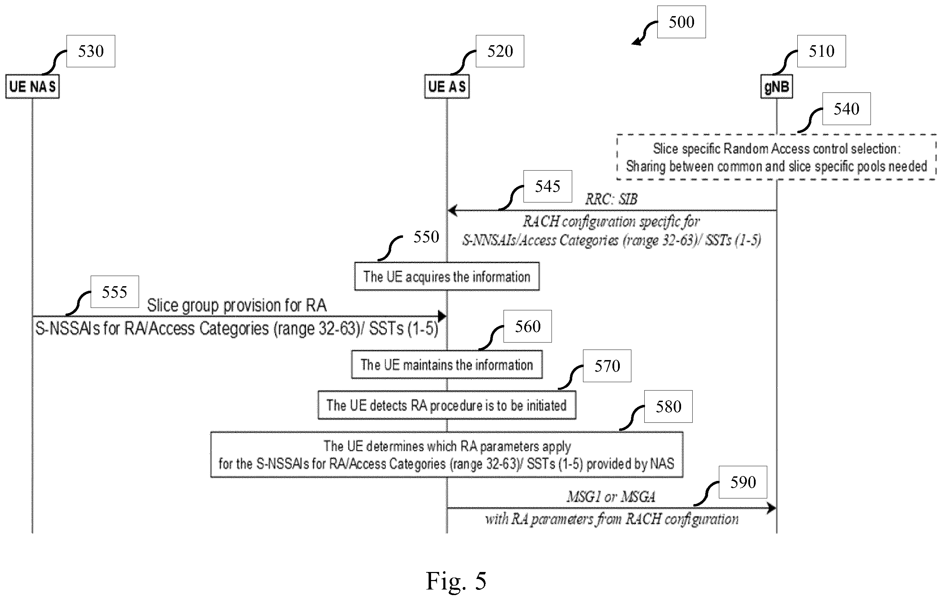

FIG. 5 depicts a procedure 500 for using a group of network slices provided by NAS for a communication between a base station 510 and a UE 120, wherein the UE 120 comprises an AS layer 520 and a NAS layer 520 and is in connected-mode with an inactive state. The base station, e.g., and gNB 510 determines the need to trigger an optimized RA control in a cell between common resources pool and slice specific resources pool in 540. The trigger can be an internal operation in the gNB 510, based on received indication for slice groups that deserve dedicated resources (dedicated RA pools), and/or based on indication on resources sharing or split.

Then, the gNB 510 configures specific RACH configuration per slice or slice group. Therefore, the gNB 510 determines which slices require prioritization by determining the slices by means of S-NSSAIs, (set of) standardized SSTs, or (set of) operator defined access category(ies) that are correspond to the slices. Additionally, the gNB 510 determines which RA parameters require setting a slice specific value (e.g. scaling factor for backoff indicator, power ramping step, backoff timer, random access occasion, PRACH configuration index, PRACH configuration frame offset, PRACH configuration period scaling, target power for MSGA or MSG1, target reference signal received power (RSRP) for MSGA or MSG1, RSRP threshold for MSGA or MSG1, maximum transmission power, minimum transmission power, etc).

The gNB 510 generates the corresponding slice specific RACH configurations with RACH parameters per slice group as determined. This information is broadcasted in 545 to the UE 120 in a system information block (SIB) message. In 550, the AS layer 520 acquires this information about the slice specific RACH configuration, e.g., stores this information in memory.

When an RA procedure is triggered to return to an active state from an RRC inactive state, the NAS layer 530 transmits a list of S-NSSAIs to the UE AS layer 520 in 555. This may be for example the case, when an upper layer determines that data packets should be uploaded, e.g., for a video upload or a message to be sent, the case when the UE 120 needs to establish a new PDU session (i.e., to send the 5GSM message "PDU SESSION ESTABLISHMENT REQUEST"), or the case when the UE 120 moves out of the current registration area and hence needs to initiates the registration procedure. Then, the NAS layer 530 is triggered to provide S-NSSAIs corresponding to the specific purpose to the AS layer 520. In the depicted embodiment, the S-NSSAIs contained in the transmitted list correspond to a network slice group. Network slices may be grouped based on their purpose, location or other common characteristics. The purpose may be RA resources isolation or prioritization.

In 560, the AS layer 520 maintains the information as received from the gNB 510 in 545 and from the NAS layer 530 in 555. With this information, the AS layer 520 initiates the triggered RA procedure in 570 and uses the received list of S-NSSAIs to determine which RACH configuration and which parameters apply in 580. Finally, the RA parameters of the determined RA configuration are sent within in MSG1 or MSGA, e.g., within the preamble.

In some embodiments, the UE 120 may be configured with information on the mapping between one or more S-NSSAIs and a network slice group identity. The mapping information can be preconfigured in the UE 120 or can be received form the network. If the mapping information is kept in the NAS layer 530, the NAS layer 530 maps a list of S-NSSAIs to a network slice group identity and provides the network slice group identity to the AS layer 520. On the other hand, if the mapping information is kept in the AS layer 520, the NAS layer 530 provides a list of S-NSSAIs to the AS layer 520 and the AS layer 520 performs the mapping and determines which RACH configuration should be applied based on the mapped network slice group identity.

In some embodiments, without loss of generality, what is applicable to a gNB 510can be applied to an eNB supporting access to a 5G core network.

FIG. 6 illustrates a simplified block diagram of a network node 411 in accordance with some embodiments. Network node 411 may be a base station combined with an MME or AMF. Network node 411 has an antenna 415, which transmits and receives radio signals. A radio frequency (RF) transceiver module 414, coupled with the antenna, receives RF signals from antenna 415, converts them to baseband signals and sends them to processor 413. RF transceiver 414 also converts received baseband signals from processor 413, converts them to RF signals, and sends out to antenna 415. Processor 413 processes the received baseband signals and invokes different functional modules to perform features in network node 411. Memory 412 stores program instructions and data 420 to control the operations of the network node 411. In the example of FIG. 6, network node 411 also includes protocol stack 480 and a set of control functional modules and circuit 490 implementing the mobility management functionality described above. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. Other nodes of the communication network such as the servers of the EDNs are equipped accordingly, i.e. with similar internal components. Instead of RF transceiver module 414 and antenna 415, these nodes may be employed wired communication technologies in order to communicate with the other network nodes.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative UE and method, and illustrative examples shown and described. Accordingly, departures may be made from such details without departing from the spirit or scope of the applicant's general inventive concept.

## Claims

1. A user equipment, UE, comprising
at least one processor, and
at least one memory storing instructions that, when executed by the at least one processor cause the UE at least to:
trigger, when the UE is in connected-mode with an inactive state, a random-access, RA, procedure for resumption of a radio resource control, RRC, connection;
receive mapping information on a mapping between one or more network slice identifiers and one or more network slice group identities;
provide, from a non-access stratum, NAS, layer, at least one network slice identifier to an access stratum, AS, layer; and
apply, by the AS layer, a network slice group identity for the RA procedure, based on the mapping information,
wherein the network slice group identity is from the one or more network slice group identities.

2. The UE according to claim 1, wherein the instructions, when executed by the at least one processor, cause the UE at least to:
provide the at least one network slice identifier in response to the RA procedure being triggered due to a UE-initiated NAS transport procedure to deliver one or more 5G session management, 5GSM, messages,
wherein the at least one network slice identifier is associated with the one or more 5GSM messages.

3. The UE according to claim 1, wherein the instructions, when executed by the at least one processor, cause the UE at least to:
provide the at least one network slice identifier in response to the RA procedure being triggered due to at least one uplink user data packet of one or more protocol data unit, PDU, sessions,
wherein the at least one slice identifier is associated with the one or more PDU sessions.

4. The UE according to any one of claims 1 to 3,
wherein the at least one network slice identifier corresponds to a single network slice selection assistance information, S-NSSAI, and
the S-NSSAI comprises a standardized slice/service type, SST.

5. The UE according to claim 4,
wherein the S-NSSAI further comprises an operator defined access category that corresponds to a network slice.

6. A method of a user equipment, UE, the method comprising:
triggering, when the UE is in connected-mode with an inactive state, a random-access, RA, procedure for resumption of a radio resource control, RRC, connection;
receiving mapping information on a mapping between one or more network slice identifiers and one or more network slice group identities;
providing, from a non-access stratum, NAS, layer, at least one network slice identifier to an access stratum, AS, layer; and
applying, by the AS layer, a network slice group identity for the RA procedure, based on the mapping information,
wherein the network slice group identity is from the one or more network slice group identities.

7. The method according to claim 6, wherein providing the at least one network slice identifier comprises:
providing the at least one network slice identifier in response to the RA procedure being triggered due to a UE-initiated NAS transport procedure to deliver one or more 5G session management, 5GSM, messages,
wherein the at least one network slice identifier is associated with the one or more 5GSM messages.

8. The method according to claim 6, wherein providing the at least one network slice identifier comprises:
providing the at least one network slice identifier in response to the RA procedure being triggered due to at least one uplink user data packet of one or more protocol data unit, PDU, sessions,
wherein the at least one slice identifier is associated with the one or more PDU sessions.

9. The method according to any one of claims 6 to 8,
wherein the at least one network slice identifier corresponds to a single network slice selection assistance information, S-NSSAI, and
the S-NSSAI comprises a standardized slice/service type, SST.

10. The method according to claim 9,
wherein the S-NSSAI further comprises an operator defined access category that corresponds to a network slice.

11. A computer program comprising instructions which, when executed by a user equipment, UE, cause the UE to perform at least the following:
triggering, when the UE is in connected-mode with an inactive state, a random-access, RA, procedure for resumption of a radio resource control, RRC, connection;
receiving mapping information on a mapping between one or more network slice identifiers and one or more network slice group identities;
providing, from a non-access stratum, NAS, layer, at least one network slice identifier to an access stratum, AS, layer; and
applying, by the AS layer, a network slice group identity for the RA procedure, based on the mapping information,
wherein the network slice group identity is from the one or more network slice group identities.
